Europäisches Patentamt

European Patent Office

Office européen des brevets

(11) Publication number: **0 457 928 A1**

# EUROPEAN PATENT APPLICATION

(21) Application number: 90107352.8

(22) Date of filing: 18.04.90

(51) Int. Cl.⁵: **C08J 9/00, C08K 5/3415, //C08L23/02**

(43) Date of publication of application:
27.11.91 Bulletin 91/48

(84) Designated Contracting States:
CH DE FR GB IT LI NL SE

(71) Applicant: **NIPPON UNICAR KABUSHIKI KAISHA**
6-1, Ohtemachi 2-chome Chiyoda-ku
Tokyo(JP)

(72) Inventor: **Senuma, Akitaka**
21-3, Saitobuncho, Kanagawa-ku
Yokohama-shi, Kanagawa-ken(JP)
Inventor: **Tsukada, Kiroku**
1-17-2-406, Saido, Konan-ku
Yokohama-shi, Kanagawa-ken(JP)

(74) Representative: **Schwan, Gerhard, Dipl.-Ing.**
Elfenstrasse 32
W-8000 München 83(DE)

(54) Heat-resistant crosslinked ethylene resin foams of open-cell type.

(57) A composition for the production of heat-resistant crosslinked ethylene resin foams of open-cell type, comprising:

(A) 100 parts by weight of an ethylene resin,

(B) 1 to 30 parts by weight of a blowing agent,

(C) 0.2 to 10 parts by weight of an organic peroxide,

(D) a component selected from the group consisting of

    (a) 0.1 to 10 parts by weight of a trifunctional monomer and 0.1 to 5 parts by weight of a silicone oil

    (b) 0.1 to 5 parts by weight of a silicone block copolymer, and

    (c) 0.1 to 5 parts by weight of polyethylene glycol, polypropylene glycol, a copolymer of ethylene oxide and propylene oxide, or a homopolymer or copolymer of other polyalkylene oxide, and

(E) 0.01 to 100 parts by weight of N-phenylmaleimide or N-cyclohexylmaleimide.

EP 0 457 928 A1

## Technical Field

The present invention relates to a composition for the production of crosslinked ethylene resin foams of open-cell type having improved heat resistance and to a process for the production of crosslinked ethylene resin foams of open-cell type having improved heat resistance from such a composition.

## Background of the Invention

The present inventors have previously proposed compositions for the production of crosslinked ethylene resin foams of open-cell type superior in breathability, water absorption and weather resistance. (See Japanese Patent Publication No. 49657/1985, and Japanese Patent Kokai Nos. 124632/1985 and 113034/1988.) However, it has been often required that the open-cell foams produced from these compositions should have more improved heat resistance when they are used as a building cushioning material, automotive interior cushioning material and packaging sheet.

The present inventors carried out investigations to develop a new composition which provides an open-cell foam having better heat resistance than that obtained from the compositions disclosed in Japanese Patent Publication No. 49657/1985, and Japanese Patent Kokai Nos. 124632/1985 and 113034/1988, and as the result thereof attained the present invention.

It is an object of the present invention to provide a composition for the production of open-cell foams having better heat resistance than before.

Another object of the present invention is to provide a process for the production of open-cell foams having good heat resistance from such a composition.

It is another object of the invention to provide a sheet of such a heat resistant crosslinked ethylene resin foams.

These objects are achieved by combining the conventional composition with N-phenylmaleimide or N-cyclohexylmaleimide.

## Disclosure of the Invention

According to the present invention there are provided:

(1) a composition for the production of heat-resistant crosslinked ethylene resin foams of open-cell type, said composition comprising:

(A) 100 parts by weight of an ethylene resin,

(B) 1 to 30 parts by weight of a blowing agent,

(C) 0.2 to 10 parts by weight of an organic peroxide,

(D) a component selected from the group consisting of the following (a), (b) and (c),

(a) 0.1 to 10 parts by weight of a trifunctional monomer and 0.1 to 5 parts by weight of a silicone oil represented by the formula:

$R_3SiO\text{-}[R_2SiO]_kSiOR_3$ (where R denotes a monovalent hydrocarbon radical, and k denotes an integer of 10 to 730)

(b) 0.1 to 5 parts by weight of a silicone block copolymer selected from:

$R_3SiO\text{-}[R_2SiO]_m\text{-}[RXSiO]_sSiR_3$ or

$RSi\text{-}[O\text{-}(R_2SiO)_q\text{-}Y]_3$

(where

R :
a monovalent hydrocarbon radical

X :
$\text{-}[(O)_p\text{-}(C_nH_{2n}O)_t\text{-}R']$,

R':
a radical selected from hydrogen, an alkyl, allyl, aralkyl and carbamyl radical,

p :
0 or 1,

Y :
$(C_nH_{2n}O)_t\text{-}R'$,

m :
0 to 300,

n :
2 to 10,

s :
1 to 30,

q :
1 to 300,

t :
1 to 100, and

$(C_nH_{2n}O)$ :
an oxyalkylene radical or a mixture of oxyalkylene radical) and

(c) 0.1 to 5 parts by weight of polyethylene glycol, polypropylene glycol, a copolymer of ethylene oxide and propylene oxide, or a homopolymer or copolymer of other polyalkylene oxide, represented by the formula:

$RO\text{-}[C_{n'}H_{2n'}O]_{t'}\text{-}R$

(where R is a radical selected from hydrogen and a monovalent hydrocarbon radical; n' is an integer of 2 to 10; and t' is an integer of 20 to 400); and

(E) 0.01 to 100 parts by weight of N-phenylmaleimide or N-cyclohexylmaleimide;

(2) a process for the production of heat-resistant crosslinked ethylene resin foams of open-cell type, said process comprising a first step of forming the composition (1) set forth above into a sheet by compression molding or extrusion molding at a temperature lower than the decomposition points of the crosslinking agent and blowing agent, and a second step of heating the sheet, thereby crosslinking the ethylene resin to such an extent that it retains its flowability and simultaneously grafting N-phenylmaleimide or N-cyclohexylmaleimide to the ethylene resin, and decomposing and gasifying the blowing agent to expand the sheet; and

(3) a sheet of the heat-resistant crosslinked ethylene resin foam of open-cell type produced according to the process (2) set forth above.

The ethylene resins used in the present invention are polymers composed mainly of ethylene. These polymers include high-pressure polyethylene, linear low-density polyethylene (LLDPE), ethylene-vinyl ester copolymers, ethylene-acrylic acid copolymer, ethylene-$\alpha$ -olefin copolymers, etc. Remarkable improvement in heat resistance is achieved with copolymers of ethylene with a polar comonomer such as ethylene-vinyl acetate copolymer, ethylene-acrylic acid copolymer, ethylene-methacrylic acid copolymer, ethylene-methyl acrylate copolymer, ethylene-methyl methacrylate copolymer, ethylene-ethyl acrylate copolymer, and ethylene-ethyl methacrylate copolymer.

The organic peroxides that can be used in the present invention are those which have a 10-minute half-life temperature of 100 to 220°C. Switchable provides it include the following. (Parenthesized numeral indicates the 10-minute half-life decomposition temperature (°C).)

Succinic acid peroxide (110), benzoyl peroxide (110), t-butylperoxy 2-ethylhexanoate (113), p-chlorobenzoyl peroxide (115), t-butyl peroxyisobutyrate (115), t-butyl peroxyisopropylcarbonate (135), t-butyl peroxylaurate (140), 2,5-dimethyl-2,5-di(benzoyloxy)hexane (140), t-butyl peroxyacetate (140), di-t-butyl diperoxyphthalate (140), t-butyl peroxymaleic acid (140), cyclohexanone peroxide (145), t-butyl diperoxybenzoate (145), dicumyl peroxide (150), 2,5-dimethyl-2,5-di(t-butylperoxy)hexane (155), t-butylcumyl peroxide (155), t-butyl hydroperoxide (158), di-t-butyl peroxide (160), 1,3-di(t-butylperoyisopropyl) benzene (160), 2,5-dimethyl-2,5-di-(t-butylperoxy)-hexyne-3-(170), di-isopropyl-benzene hydroperoxide (170), p-methane hydroperoxide (180), and 2,5dimethylhexane-2,5-dihydroperoxide (213).

The blowing agents that can be used in the present invention are those which have a foaming temperature in the range of 90 to 220°C. Suitable blowing agents include any blowing agent which is used in combination with a promoter or auxiliary to adjust the foaming temperature to this range.

Examples of the blowing agent include the following:

Azobisisobutyronitrile, diazocarbonamide, p-toluenesulfonyl hydrazide, 4,4'-oxybis-(benzenesulfonyl hydrazide), n-heptane, n-octane, n-nonane, and n-decane.

The trifunctional monomers that can be used in the present invention include triallyl cyanurate, triallyl isocyanurate, triallyl trimellitate, etc.

The silicone oils that can be used in the present invention should preferably be those which have a viscosity lower than 10,000 cs at room temperature (corresponding to a degree of polymerization of about 730).

The polyethylene glycol, polypropylene glycol, or a copolymer of ethylene oxide and propylene oxide that can be used in the present invention should preferably be one which has a molecular weight greater than 1000 (corresponding to a degree of polymerization of about 20). Those which have a molecular weight lower than 1000 are less miscible and liable to exude from the surface of the product after molding.

The composition of the present invention should contain N-phenylmaleimide or N-cyclohexylmaleimide in an amount of 0.01 to 100 parts by weight. With less than 0.01 parts by weight, it does not produce the effect of improving hear resistance. With more than 100 parts by weight, it hardly enhances the effect any more.

The composition of the present invention should contain the organic peroxide in an amount of 0.2 to 10 parts by weight. With less than 0.2 parts by weight, the organic peroxide is not enough to increase the viscosity of the resin when the composition is heated, and the resulting foam is subject to permanent set. With more than 10 parts by weight, the organic peroxide does not enhance the crosslinking effect any more.

The composition of the present invention should contain the blowing agent in an amount of 1 to 30 parts by weight. With less than 1 part by weight, the blowing agent hardly produces the foaming effect. With more than 30 parts by weight, the blowing agent is mostly wasted at the time of blowing.

The composition of the present invention should contain the trifunctional monomer in an amount of 0.1 to 10 parts by weight. With less than 0.1 parts by weight, the trifunctional monomer hardly produces its effect. With more than 10 parts by weight, the trifunctional monomer exudes out from the surface of the foam product.

The composition of the present invention should contain the silicone oil in an amount of 0.1 to 5 parts by weight. With less than 0.1 parts by weight, the silicone oil does not provide the uniform fine cell structure. With more than 5 parts by weight, the silicone oil exudes from the surface of the foam product.

The composition of the present invention should contain the silicone block copolymer selected from:

$$R_5 SiO\text{-}[R_2 SiO]_m\text{-}[RXSiO]_s\text{-}SiR_3 \quad (1) \text{ or}$$

$$RSi\text{-}[O\text{-}(R_2 SiO)_q\text{-}Y]_3 \quad (2)$$

(where

| | |
|---|---|
| R : | a monovalent hydrocarbon radical, |
| X : | $-[(O)_p\text{-}(C_n H_{2n} O)_t\text{-}R']$, |
| R' : | a radical selected from hydrogen, an alkyl, allyl, aralkyl and carbamyl radical, |
| p : | 0 or 1, |
| Y : | $(C_n H_{2n} O)_t\text{-}R'$, |
| m : | 0 to 300, |
| n : | 2 to 10, |
| s : | 1 to 30, |
| q : | 1 to 300, |
| t : | 1 to 100, and |
| $(C_n H_{2n} O)$ : | an oxyalkylene radical or a mixture of oxyalkylene radicals) |

The silicone block copolymer should have a molecular weight higher than 500. With a molecular weight smaller than 500, the silicone block copolymer exudes from the surface of the product. The composition of the present invention should contain the silicone block copolymer in an amount of 0.1 to 5 parts by weight. With less than 0.1 parts by weight, the silicone block copolymer does not provide a foam product with uniform fine cell structure. With more than 5 parts by weight, the silicone block copolymer tends to exude from the surface of the foam product.

The composition of the present invention may be incorporated with an antioxidant, UV light absorber, inorganic filler, pigment, flame retardant, rubber, etc. according to need.

The composition of the present invention should be heated above the temperature at which blowing and crosslinking take place. To be concrete, the heating temperature is in the range of 120 to 300 °C . The crosslinking takes place even though the heating temperature is lower than the above-mentioned decomposition temperature of the organic peroxide, which is indicated in terms of the 10-minute half-life decomposition temperature for a pure product. Heating may be accomplished under normal pressure or under pressure.

The invention will be described with reference to the following examples.

## Example 1

The following components were mixed at 70 °C by roll-milling for 40 minutes and the mixture was pelletized.

- 100 parts by weight of an ethylene-vinyl acetate copolymer having a melt index of 20 and containing 28 wt% of vinyl acetate (a product of Nippon Unicar Co., Ltd.)
- 4 parts by weight of an azodicarbonamide blowing agent "Cell-mike C20" having a blowing temperature of 200 °C (a product of Sankyo Kasei Co., Ltd.)
- 0.7 parts by weight of "Perkadox 14" having a decomposition temperature of 160 °C (a product of Kayaku Noury Co., Ltd.)
- 1 part by weight of polyethylene glycol having a molecular weight of 20,000 (a product of Wako Junyaku Co., Ltd.)
- 2 parts by weight of N-phenylmaleimide (a product of Nippon Shokubai Kagaku Co., Ltd.)

The pellets were made into a 0.2 mm thick sheet by compression molding at 80°C , under a pressure of 100 kg/cm², for 5 minutes. The resulting sheet was placed in an oven at 210 °C , with a polyester film underlaid. The sheet uniformly expanded within 5 minutes. The foam was allowed to stand until it cooled to room temperature. Thus there was obtained a 0.7 mm thick foam having an average cell diameter of 0.2 mm. This foam sheet was found to have an open-cell ratio of 66% (measured according to ASTM D-2856) and an apparent density of 0.28 g/cm³.

A test piece conforming to JIS K7113, type 3, was cut out of the foam sheet. The test piece was suspended in a hot air bath at 100 °C , with one end fixed and the other end weighted with a 3-g load. Thirty minutes later, the foam sheet was found to have elongated 15%. The tensile strength and elongation of the foam sheet were 5.4 kg/cm² and 300%, respectively, measured at 23 °C according to JIS K7113. This foam sheet did not suffer cracking even after exposure for 450 hours with Sunshine weather meter (WEL-SUN-HC, made by Suga Shikenki Co., Ltd.)

## Comparative Example 1

The same procedure as in Example 1 was repeated except that N-phenylmaleimide was not used. There was obtained a 0.7 mm thick foam sheet having an average cell diameter of 0.15 mm. This foam sheet was found to have an open-cell ratio of 74% (measured according to ASTM D-2856) and an apparent density of 0.28 g/cm³.

A test piece conforming to JIS K7113, type 3, was cut out of the foam sheet. The test piece was suspended in a hot air bath at 100 °C , with one end fixed and the other end weighted with a 6-g load. Thirty minutes later, the foam sheet was found to have elongated more than three times the original length. The tensile strength and elongation of the foam sheet were 4.1 kg/cm$^2$ and 330%, respectively, measured at 23 °C according to JIS K7113. This foam sheet did not suffer cracking even after exposure for 450 hours with Sunshine weather meter (WEL-SUN-HC, made by Suga Shikenki Co., Ltd.)

Example 2

The following components were mixed at 80 °C by roll-milling for 20 minutes and the mixture was pelletized.

- 100 parts by weight of an ethylene-ethyl acrylate copolymer having a melt index of 20 and containing 20 wt% of ethyl acrylate (a product of Nippon Unicar Co., Ltd.)
- 4 parts by weight of an azodicarbonamide blowing agent "Cell-mike C20" having a blowing temperature of 200 °C (a product of Sankyo Kasei Co., Ltd.)
- 0.7 parts by weight of "Perkadox 14" having a decomposition temperature of 160 °C (a product of Kayaku Noury Co., Ltd.)
- 1 part by weight of a silicone oil having a viscosity of 50 cs (a product of Nippon Unicar Co., Ltd.)
- 1 part by weight of N-cyclohexylmaleimide (a product of Kayaku Noury Co., Ltd.)

The pellets were made into a 1 mm thick sheet by compression molding at 90 °C , under a pressure of 100 kg/cm$^2$, for 5 minutes. The resulting sheet was placed in an oven at 210 °C , with a 200-mesh wire net underlaid, for 7 minutes. The foam was allowed to stand until it cooled to room temperature. Thus there was obtained a 3-mm thick foam having an average cell diameter of 0.23 mm. This foam sheet was found to have an open-cell ratio of 63% and an apparent density of 0.38 g/cm$^3$.

A test piece conforming to JIS K7113, type 3, was cut out of the foam sheet. The test piece was suspended in a hot air bath at 100 °C , with one end fixed and the other end weighted with a 6-g load. Thirty minutes later, the foam sheet was found to have elongated 10%. The tensile strength and elongation of the foam sheet were 5.8 kg/cm$^2$ and 250%, respectively.

Comparative Example 2

The same procedure as in Example 2 was repeated except that N-cyclohexylmaleimide was not used. There was obtained a 3 mm thick foam sheet having an average cell diameter of 0.2 mm. This foam sheet was found to have an open-cell ratio of 70% and an apparent density of 0.28 g/cm$^3$.

A test piece conforming to JIS K7113, type 3, was cut out of the foam sheet. The test piece was suspended in a hot air bath at 100 °C , with one end fixed and the other end weighted with a 6-g load. Thirty minutes later, the foam sheet was found to have elongated more than three times the original length. The tensile strength and elongation of the foam sheet were 4.8 kg/cm$^2$ and 250%, respectively.

Example 3

The following components were mixed at 100 °C using a Banbury mixing for 20 minutes and the mixture was pelletized.

- 100 parts by weight of an ethylene-vinyl acetate copolymer having a melt index of 2.5 and containing 18 wt% of vinyl acetate (a product of Nippon Unicar Co., Ltd.)
- 6 parts by weight of an azodicarbonamide blowing agent "Cell-mike C20" having a blowing temperature of 200 °C (a product of Sankyo Kasei Co., Ltd.)
- 0.7 parts by weight of "Perkadox 14" having a decomposition temperature of 160 °C (a product of Kayaku Noury Co., Ltd.)
- 1 part by weight of a silicone block copolymer represented by the formula below

$$CH_3Si[O\{(CH_3 \quad )_2SiO\}_6(C_2H_4O)_{20}(C_3H_6O)_{20}C_4H_9]$$

having a viscosity of 1,000 cs (a product of Nippon Unicar Co., Ltd.)
- 0.1 parts by weight of "Irganox 1010" (an antioxidant produced by Ciba-Geigy)
- 3 parts by weight of N-phenylmaleimide (a product of Nippon Shokubai Kagaku Co., Ltd.)

The pellets were made into a 1 mm thick sheet by compression molding at 105 °C . The resulting sheet was placed in an oven at 210 °C , with a polyester film underlaid. The sheet uniformly expanded within 8 minutes. The foam was allowed to stand until it cooled to room temperature. Thus there was obtained a 3 mm thick foam having an average cell diameter of 0.3 mm. This foam sheet was found to have an open-cell ratio of 68% and an apparent density of 0.18 g/cm$^3$.

A test piece conforming to JIS K7113, type 3, was cut out of the foam sheet. The test piece was suspended in a hot air bath at 100 °C , with one end fixed and the other end weighted with a 6-g load. Thirty minutes later, the foam sheet was found to have elongated 10%. The tensile strength and elongation of the foam sheet were 5.0 kg/cm$^2$ and 250%, respectively.

## Comparative Example 3

The same procedure as in Example 3 was repeated except that N-phenylmaleimide was not used. There was obtained a 3 mm thick foam sheet having an average cell diameter of 0.25 mm. This foam sheet was found to have an open-cell ratio of 72% and an apparent density of 0.20 g/cm³.

A test piece conforming to JIS K7113, type 3, was cut out of the foam sheet. The test piece was suspended in a hot air bath at 100 °C , with one end fixed and the other end weighted with a 6-g load. Thirty minutes later, the foam sheet was found to have elongated more than three times the original length. The tensile strength and elongation of the foam sheet were 4.1 kg/cm² and 200%, respectively.

The composition of the present invention provides an open-cell foam of ethylene resin having improved heat resistance and strength and a high open-cell ratio on account of N-phenyl-maleimide or N-cyclohexylmaleimide incorporated therein. The open-cell foam will find use as a building and automotive cushioning material and a packaging material.

## Claims

1. A composition for the production of heat-resistant crosslinked ethylene resin foams of open-cell type, said composition comprising:

(A) 100 parts by weight of an ethylene resin,

(B) 1 to 30 parts by weight of a blowing agent,

(C) 0.2 to 10 parts by weight of an organic peroxide,

(D) a component selected from the group consisting of the following (a), (b) and (c),

(a) 0.1 to 10 parts by weight of a trifunctional monomer and 0.1 to 5 parts by weight of a silicone oil represented by the formula:

$R_3SiO-[R_2SiO]_kSiOR_3$ (where R denotes a monovalent hydrocarbon radical, and k denotes an integer of 10 to 730)

(b) 0.1 to 5 parts by weight of a silicone block copolymer selected from:

$R_3SiO-[R_2SiO]_m-[RXSiO]_s-SiR_3$ or

$RSi-[O-(R_2SiO)_q-Y]_3$

(where

R :

a monovalent hydrocarbon radical

X :

$-[(O)_p-(C_nH_{2n}O)_t-R']$,

R':

a radical selected from hydrogen, an alkyl, allyl, aralkyl and carbamyl radical,

p :

0 or 1,

Y :

$(C_nH_{2n}O)_t-R'$,

m :

0 to 300,

n :

2 to 10,

s :

1 to 30,

q :

1 to 300,

t :

1 to 100, and

$(C_nH_{2n}O)$ :

an oxyalkylene radical or a mixture of oxyalkylene radical) and

(c) 0.1 to 5 parts by weight of polyethylene glycol, polypropylene glycol, a copolymer of ethylene oxide and propylene oxide, or a homopolymer or copolymer of other polyalkylene oxide, represented by the formula:

$RO-[C_n,H_{2n},O]_{t},-R$

(where R is a radical selected from hydrogen and a monovalent hydrocarbon radical; n' is an integer of 2 to 10; and t' is an integer of 20 to 400); and

(E) 0.01 to 100 parts by weight of N-phenylmaleimide or N-cyclohexylmaleimide.

2. A process for the production of heat-resistant crosslinked ethylene resin foams of open-cell type, said process comprising a first step of forming the composition for ethylene resin foam as set forth in Claim 1 into a sheet by compression molding or extrusion molding at a temperature lower than the decomposition points of the crosslinking agent and blowing agent, and a second step of heating the sheet, thereby crosslinking the ethylene resin to such an extent that it retains its flowability and simultaneously grafting N-phenylmaleimide or N-cyclohexylmaleimide to the ethylen resin, and decomposing and gasifying the blowing agent to expand the sheet;

3. A sheet of a heat-resistant crosslinked ethylene resin foam of open-cell type which is produced according to the process set forth in Claim 2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | LU-A- 58 485 (SUMITOMO) <br> * Claims 1-7; pages 3,4 * | 1-3 | C 08 J 9/00 <br> C 08 K 5/3415// <br> C 08 L 23/02 |
| Y | US-A-3 544 490 (ALEXANDER) <br> * Claims 1-16; example 1 * | 1-3 | |
| Y | DATABASE WPIL, accession 88-17748, Derwent Publications Ltd, London, GB; & JP-A-63 113 035 (NIPPON UNICAR K.K.) <br> * Both abstracts * | 1-3 | |
| Y | DATABASE WPIL, accession no. 84-034188, Derwent Publications Ltd, London, GB; & JP-A-58 224 727 (SUMITOMO) <br> * Both abstracts * | 1-3 | |
| Y | US-A-4 501 711 (SENUMA et al.) <br> * Column 6, example 1; column 9, comparative example 1; claims 1-2 * | 1-3 | |
| A | EP-A-0 142 724 (JAPAN STYRENE PAPER) <br> * Claims 1-10; page 4, lines 13-23; page 10, example 6 * | 1-3 | TECHNICAL FIELDS SEARCHED (Int. Cl.5) <br><br> C 08 J <br> C 08 K |
| A | DE-A-1 920 692 (SUMITOMO) <br> * Claims 1-6; pages 2,4 * | 1-3 | |

The present search report has been drawn up for all claims

| Place of search | Date of completion of the search | Examiner |
|---|---|---|
| THE HAGUE | 31-07-1991 | OUDOT R. |

European Patent
Office

## CLAIMS INCURRING FEES

The present European patent application comprised at the time of filing more than ten claims.

☐ All claims fees have been paid within the prescribed time limit. The present European search report has been drawn up for all claims.

☐ Only part of the claims fees have been paid within the prescribed time limit. The present European search report has been drawn up for the first ten claims and for those claims for which claims fees have been paid,

namely claims:

☐ No claims fees have been paid within the prescribed time limit. The present European search report has been drawn up for the first ten claims.

## X | LACK OF UNITY OF INVENTION

The Search Division considers that the present European patent application does not comply with the requirement of unity of invention and relates to several inventions or groups of inventions,
namely:

1. Claims 1D(a)-3

2. Claims 1D(b)-3

3. Claims 1D(c)-3

☒ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid,

namely claims:

☐ None of the further search fees has been paid within the fixed time limit. The present European search report has been drawn up for those parts of the European patent application which relate to the invention first mentioned in the claims,

namely claims: